# FASCICULE DE BREVET EUROPEEN

(11) **EP 4 491 913 B1**
(45) Date de publication et mention de la délivrance du brevet: **07.10.2026**
(21) Numéro de dépôt: 24187422.1
(22) Date de dépôt: 09.07.2024
(51) Int. Cl.: F16J 13/12

(54) **DISPOSITIF DE FERMETURE ÉTANCHE D'UNE OUVERTURE DE RÉSERVOIR DE STOCKAGE**
VORRICHTUNG ZUM DICHTEN VERSCHLIESSEN EINER ÖFFNUNG EINES SPEICHERTANKS
DEVICE FOR SEALING AN OPENING OF A STORAGE TANK

(30) Priorité: 13.07.2023 FR 2307534
(43) Date de publication de la demande: 15.01.2025
(73) Titulaire: Viessmann Holding International GmbH, 35108 Allendorf (Eder) (DE)
(72) Inventeur: MANGIN, Arnaud, 57530 COURCELLES-CHAUSSY (FR); SCHILLER, Manuel, 57385 TRITTELING-REDLACH (FR); DONNOT, Pierre, 54760 FAULX (FR)
(74) Mandataire: Ipsilon

(56) Documents cités:
- EP-A2- 0 205 060
- EP-B1- 1 090 534
- CH-A- 21 935
- DE-A1- 2 943 918
- FR-A1- 2 790 744
- US-A- 3 086 675

## Description

La présente invention se rapporte au domaine des réservoirs de stockage et plus particulièrement au domaine des mécanismes de fermeture étanche des ouvertures de ces réservoirs.

Classiquement, comme détaillé à titre d'exemple par la publication EP1 090534, une fermeture étanche de réservoir fait intervenir un mécanisme de serrage d'une surface d'obturation contre un joint intermédiaire qui entoure l'ouverture de ce réservoir. Dans le cadre de réservoirs de stockage à hautes pressions, les ouvertures sont réalisées au niveau de structures soudées aux réservoirs qui présentent la forme d'un tube dont l'extrémité réalise un orifice de forme sensiblement cylindrique. Cette construction soudée permet notamment de répondre à des contraintes de résistance à des pressions de stockage de plusieurs bars, parfois même jusqu'à une vingtaine de bars. Les systèmes de fermetures actuels font notamment intervenir une contre-bride en fonte qui réalise un capuchon pour le recouvrement de l'ouverture portée par le tube et d'au moins une partie de sa surface périphérique. Afin d'assurer une étanchéité lors du positionnement de la contre-bride sur l'extrémité du tube, la contre-bride intègre un disque en inox au niveau de sa surface intérieure. Ce disque en inox présente des dimensions légèrement supérieures à l'ouverture du tube de façon à permettre le pincement d'un joint plat contre une surface ou une lèvre du bord de l'ouverture du tube et écarter tout contact du contenu du réservoir avec la fonte de la contre-bride. Le maintien du capuchon en position et le serrage du joint plat en pincement entre le disque et le tube sont assurés par la coopération d'un filetage porté par la surface périphérique du tube avec un filetage complémentaire porté par la surface intérieure du capuchon qui fonctionne comme une bague entourant l'extrémité du tube. Une telle solution, si elle est efficace pour garantir une étanchéité, impose le serrage du joint plat par la contre-bride sur le bord de l'orifice cylindrique. Aussi, la qualité de l'étanchéité est déterminée par l'importance du serrage de la contre-bride sur le réservoir. Par ailleurs, de par le mécanisme de serrage qu'elle impose, une telle contre-bride réalise une structure volumineuse et susceptible d'être encombrante au niveau de l'ouverture du réservoir.

La présente invention a pour but de pallier ces inconvénients en proposant une solution technique dont la construction permet une fermeture de l'orifice d'ouverture d'un réservoir et son verrouillage étanche qui est indépendante d'un paramètre de serrage d'une structure obturante telle qu'une contre-bride sur l'ouverture du réservoir, tout en proposant un encombrement particulièrement restreint au niveau de l'orifice du réservoir.

L'invention a ainsi pour objet un dispositif de fermeture étanche d'une ouverture de réservoir de stockage pour un contenu susceptible d'être à haute pression, ce dispositif comprenant:
- un goulot cylindrique circulaire positionné sur la paroi du réservoir de sorte que la surface intérieure du goulot entoure l'ouverture du réservoir, la surface intérieure du goulot cylindrique comprenant au moins deux filets arrangés traversants de l'épaisseur du goulot,
- un bouchon cylindrique circulaire de dimensions complémentaires au goulot, ce bouchon intégrant au moins un joint sur sa face périphérique qui soit configuré pour être en appui contre la surface intérieure du goulot lors du positionnement du bouchon dans le goulot, la surface périphérique du bouchon comprenant au moins deux tétons positionnés entre eux de façon à coopérer individuellement avec un filet respectif du goulot,
le bouchon comprenant une structure de renfort s'opposant à sa déformation sous l'effet d'une pression exercée depuis l'intérieur du réservoir de stockage, ladite structure de renfort du bouchon étant réalisée par une âme métallique surmoulée.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

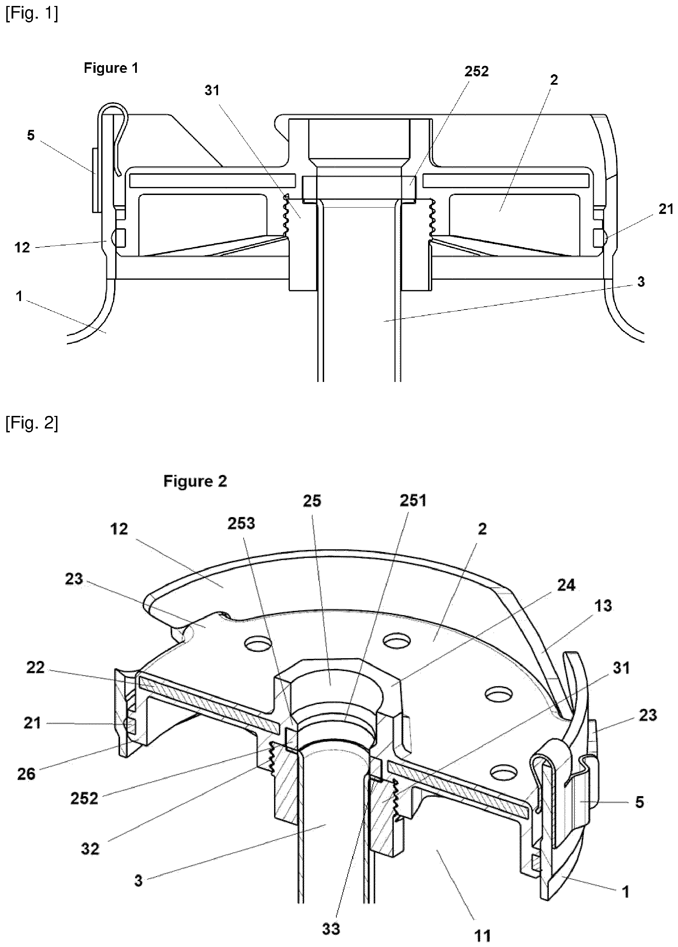

[Fig. 1] représente une illustration schématique selon une vue en section d'un exemple d'ouverture de réservoir comprenant un dispositif de fermeture de l'invention,
[Fig. 2] représente une illustration schématique d'un premier exemple de dispositif de fermeture de l'invention,

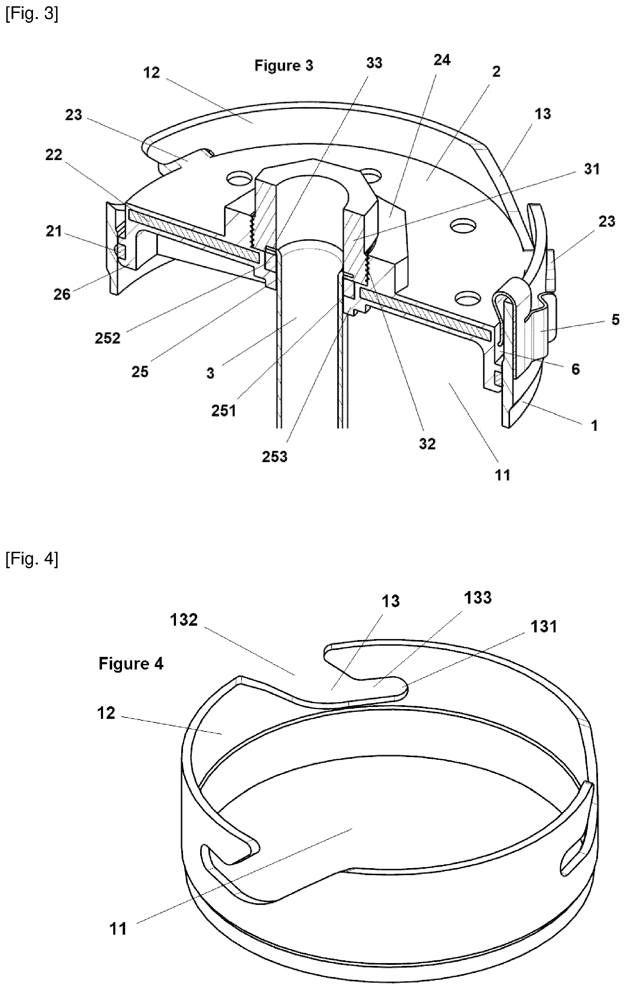

[Fig. 3] représente une illustration schématique d'un second exemple de dispositif de fermeture de l'invention,
[Fig. 4] représente une illustration schématique d'un exemple de goulot cylindrique circulaire participant à la réalisation d'un dispositif de fermeture de l'invention,

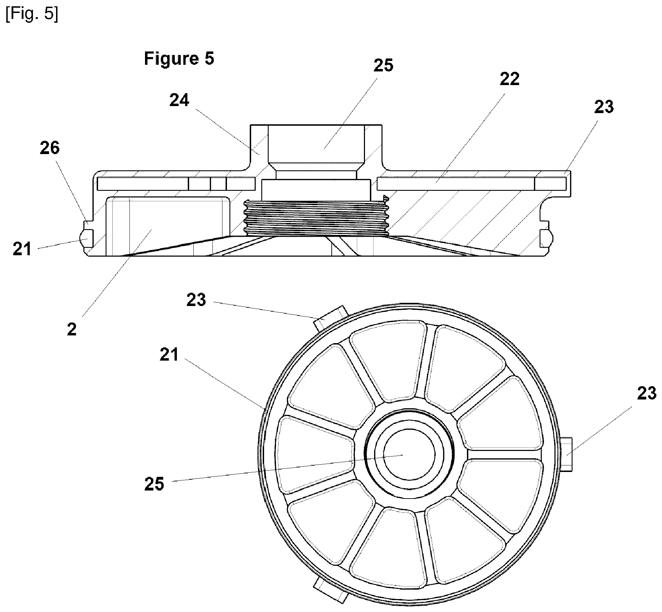

[Fig. 5] représente une illustration schématique, selon une vue en section et selon une vue du côté d'une des faces, d'un exemple de bouchon cylindrique circulaire participant à la réalisation d'un dispositif de fermeture de l'invention.

L'invention se rapporte à un dispositif de fermeture étanche d'une ouverture 11 de réservoir 1 de stockage pour un contenu susceptible d'être à haute pression, ce dispositif compenant:
- un goulot 12 cylindrique circulaire positionné sur la paroi du réservoir 1 de sorte que la surface intérieure du goulot 12 entoure l'ouverture 11 du réservoir 1, la surface intérieure du goulot 12 cylindrique comprenant au moins deux filets 13 arrangés traversants de l'épaisseur du goulot 12,
- un bouchon 2 cylindrique circulaire de dimensions complémentaires au goulot 12, ce bouchon 2 intégrant au moins un joint 21 sur sa face périphérique qui soit configuré pour être en appui contre la surface intérieure du goulot 12 lors du positionnement du bouchon 2 dans le goulot 12, la surface périphérique du bouchon 2 comprenant au moins deux tétons 23 positionnés entre eux de façon à coopérer individuellement avec un filet 13 respectif du goulot 12,
le bouchon 2 comprenant une structure de renfort 22 s'opposant à sa déformation sous l'effet d'une pression exercée depuis l'intérieur du réservoir 1 de stockage, ladite structure de renfort 22 du bouchon étant réalisée par une âme métallique surmoulée.

Un tel dispositif de fermeture permet d'opérer une étanchéification de l'ouverture 11 du goulot 12 par pincement du joint 21 entre le bord périphérique du bouchon 2 et la surface intérieure du goulot 12 sans que la qualité de la fermeture soit liée à la force du serrage du bouchon 2 au niveau du goulot 12. La seule complémentarité de forme dans un plan en section au niveau du goulot 12 du réservoir 1 suffit pour opérer un pincement du joint 21 entre le bouchon 2 et l'intérieur du goulot 12 de sorte que la compression réalisée en tenaille du joint 21 entre ces deux éléments 2, 12 étanchéifie le montage du bouchon 2 sur le réservoir 1.

Le verrouillage du bouchon 2 avec le goulot 12 du réservoir 1 fait intervenir la coopération des au moins deux tétons 23 du bouchon 2 avec les filets 13 du réservoir 1, chacun des tétons 23 étant guidé en glissement dans la longueur d'un filet 13 respectif. Chaque filet 13 présente un arrangement rainuré qui permet le guidage d'un téton 23 en déplacement selon une course similaire à celle d'au moins une portion d'un pas de vis, lors d'un pivotement axial du bouchon 2 autour d'un axe passant par le centre de l'ouverture 11 circulaire du goulot 12. Le rainurage des filets 13 est formé traversant de l'épaisseur du goulot 12 de sorte que, de façon préférentielle, un téton 23 positionné au travers d'un filet 13 présente une extrémité manipulable depuis la face extérieure périphérique du goulot 12.

Selon un exemple se rapportant à une variante de construction, les filets 13 du goulot 12 et les tétons 23 du bouchon 2 sont distribués de sorte que leurs barycentres respectifs sont positionnés sur l'axe du cylindre du goulot 12. Selon une telle configuration, les tétons 23 et filets 13 sont répartis sur la périphérie du bouchon 2 de façon à obtenir une distribution homogène des points d'ancrage du bouchon 2 sur le goulot 12 et réaliser un maintien sensiblement uniforme à la périphérie du bouchon 2.

De façon préférentielle, les tétons 23 sont positionnés sur la périphérie du bouchon 2 en rayonnant radialement depuis le centre du bouchon 2 selon une distribution symétrique autour de l'axe de pivotement du bouchon 2. Toutefois, une distribution différente pourrait être envisagée.

Selon un exemple se rapportant à une variante particulière de réalisation des tétons 23 et susceptible d'être combinée avec l'une ou l'autre des variantes précédemment détaillées, ceux-ci présentent un arrangement sensiblement aplati en étant disposés selon une longueur du bord périphérique du bouchon 2. Cet arrangement permet ainsi une insertion et un glissement des tétons 23 le long des filets 13 respectifs tout en empêchant tout risque de bascule ou pivotement du bouchon 2 autour d'un axe du plan du bouchon 2 lorsque celui-ci n'est équipé que de deux tétons 23 disposés en alignement avec l'axe de pivotement du bouchon 2 par rapport au goulot 12.

Selon un exemple se rapportant à une autre variante du dispositif de fermeture de l'invention et susceptible d'être combinée avec l'une ou l'autre des variantes précédemment détaillées, les au moins deux filets 13 du goulot 12 comprennent, d'une part, une première extrémité 131 ouverte au niveau du rebord d'extrémité du goulot 12 et, d'autre part, une seconde extrémité 132 fermée définissant une fin de course des tétons 23 du bouchon 2, les secondes extrémités 132 des filets 13 comprenant un logement 133 respectif réalisé de sorte que ces logements 133 présentent un bord plus rapproché du rebord d'extrémité du goulot 12 par rapport au bord juxtaposé d'une portion de la course du filet 13 à proximité du logement 133 qui est plus éloigné du rebord d'extrémité du goulot 12. Il convient de relever que les dimensions du logement 133 sont adaptées pour recevoir un téton 23 du bouchon 2. Un tel logement 133 en extrémité du filet 13 permet ainsi la réception et le positionnement d'un téton 23 arrivé à la fin de la course de son glissement le long du filet 13.

La construction du logement 133 de sorte qu'un de ses bords soit plus rapproché du rebord d'extrémité du goulot 12 que le bord juxtaposé d'une portion de la course du filet 13 à proximité du logement 133 réalise un relief ou un coin de retenue du téton 23 dans le logement 133. Ainsi, lors de son déplacement le long du filet 13, en particulier lorsque le contenu du réservoir 1 présente une pression supérieure à la pression extérieure, les tétons 23 du bouchon 2 sont en appui contre les bords des filets 13 et des logements 133 respectifs les plus proches du rebord d'extrémité du goulot 12. Avant d'atteindre sa fin de course en insertion dans le logement 133, le téton 23 est déplacé en appui contre le bord du relief ou coin de retenue positionné au niveau de la jonction entre le logement 133 et le reste du filet 13. Aussi, une fois les tétons 23 en insertion dans leurs logements 133 respectifs, sous l'effet de la pression intérieure du réservoir, le bouchon 2 positionne les tétons 23 en appui contre les bords respectifs des logements 133 les plus rapprochés des rebords d'extrémité du goulot 12. Chaque téton 23 est ainsi maintenu contre un bord du logement 133, bloqué en déplacement entre, d'une part, la seconde extrémité 132 fermée du filet 13 et, d'autre part, le relief que réalise le coin de retenue du téton 23 pour limiter, voire empêcher, son déplacement accidentel en direction de la première extrémité 131 ouverte du filet 13. Aussi, la coopération du téton 23 avec le coin de retenue lors de son déplacement le long du filet 13 correspond sensiblement à celle d'un phénomène de clipsage du bouchon 2 avec le goulot 12.

Selon un exemple se rapportant à une autre variante du dispositif de fermeture de l'invention et susceptible d'être combinée avec l'une ou l'autre des variantes précédemment détaillées, les au moins deux filets 13 du goulot 12 comprennent, d'une part, une première extrémité 131 ouverte au niveau du rebord d'extrémité du goulot 12 et, d'autre part, une seconde extrémité 132 fermée définissant une fin de course des tétons 23 du bouchon 2, les filets 13 comprenant une portion de fin de course intégrant un logement 133 disposé dans un plan sensiblement perpendiculaire à l'axe du cylindre du goulot 12. Cette orientation du logement 133 en extrémité du filet 13 est configurée pour positionner le bouchon 2 dans le goulot 12 selon un arrangement correspondant à une position définitive et optimale pour le verrouillage étanche du bouchon 2 avec le goulot 12 dès lors que les tétons 23 entrent en butée contre les extrémités des logements 133 correspondant aux extrémités fermées 132 de leurs filets 13 respectifs. Cette orientation particulière de chacun des logements 133 présente ainsi une inclinaison par rapport à la course du reste du filet 13 qui y est associé. En effet, les filets 13 présentent une portion principale de course depuis leurs premières extrémités 131 ouvertes au niveau du rebord d'extrémité du goulot 12 arrangée selon une course similaire à celle d'au moins une portion d'un pas de vis. Aussi, les filets 13 présentent une déviation de leurs courses au niveau des jonctions respectives entre, d'une part, les logements 133 et, d'autre part, les portions principales des courses des filets 13, de sorte que cette déviation montre une inclinaison entre les deux portions des filets 13. La déviation entre les deux portions de course des filets 13 est susceptible de présenter la forme d'une courbure ou celle d'un ou de plusieurs angles similaires à celle d'un arc brisé. Il est toutefois impératif que les largeurs des filets 13 au niveau des déviations respectives soient suffisamment larges pour s'assurer de l'efficacité du déplacement des tétons 23 le long des filets 13 lors du franchissement des jonctions entre les deux portions des filets 13.

Selon l'invention, le bouchon 2 comprend une structure de renfort 22 s'opposant à sa déformation sous l'effet d'une pression exercée depuis l'intérieur du réservoir 1 de stockage. Cette structure de renfort 22 est notamment arrangée selon une distribution qui opère une rigidification d'au moins une partie de la portion centrale du bouchon 2, c'est-à-dire de la portion située au niveau de l'axe de pivotement axial du bouchon 2, avec au moins une partie de la portion périphérique du bouchon 2. Cette structure de renfort 22 est ainsi configurée pour éviter tout déplacement en hauteur de la portion centrale du bouchon 2 par rapport à sa portion périphérique, c'est-à-dire toute variation de position le long d'un axe sensiblement parallèle à l'axe de pivotement du bouchon 2.

Selon l'invention, la structure de renfort 22 du bouchon 2 est réalisée par une âme métallique surmoulée. A titre d'exemple de construction, l'âme métallique présente un arrangement plan. Un tel arrangement facilite le positionnement et l'intégration de la structure de renfort 22 dans l'épaisseur du bouchon 2 en limitant son encombrement. Selon un exemple de construction alternatif, l'âme métallique présente une construction comportant un arrangement convexe pour être positionné en direction de la surface du bouchon 2 destinée à faire face à l'intérieur du réservoir 1. Cette convexité de la structure de renfort 22 et son orientation particulière permettent ainsi d'optimiser la distribution des forces et des contraintes à l'intérieur du bouchon 2 dans le cadre d'efforts exercés par une pression éventuelle provenant de l'intérieur du réservoir 1. Ainsi, en cas de pression excessive susceptible de déformer la structure de renfort 22, la convexité opère une distribution des contraintes supportées de sorte que les efforts supportés dans la partie centrale de la structure se trouvent orientés vers la périphérie de la structure de renfort 22. Les efforts redirigés au niveau du bord périphérique du bouchon 2 augmentent la pression exercée par le joint 21 contre la paroi intérieure du goulot 12. La capacité d'étanchéité du bouchon 2 au réservoir 1 s'en trouve alors accrue. A titre d'exemple également, l'âme métallique est disposée dans l'épaisseur du bouchon 2 et susceptible de présenter la forme d'une structure pleine configurée pour correspondre à l'essentiel sinon l'ensemble du bouchon 2 en section. Selon une alternative de construction, la structure de renfort est réalisée sous la forme d'une structure maillée ou grillagée. Une telle construction permet d'opérer une intégration plus intime de la structure de renfort métallique avec le matériau propre au reste du bouchon 2, la matière du bouchon 2 étant distribuée au travers des mailles et ouverture de la grille. A titre d'exemple, ce maillage ou grillage présente un arrangement en étoile dont différentes branches rayonnent depuis la partie centrale en direction de la partie périphérique du bouchon 2. Les extrémités radiales de ces différentes branches sont également susceptibles d'être réunies par une jonction périphérique correspondant par exemple à la ligne d'un cercle circonscrit de l'étoile.

Selon un exemple se rapportant à une autre variante spécifique et susceptible d'être combinée avec la variante précédemment détaillée, la structure de renfort 22 du bouchon 2 est réalisée par au moins un relief qui présente la forme d'un bourrelet au niveau de l'épaisseur du bouchon 2. Cette structure de renfort 22 est ainsi formée par une surépaisseur localisée au niveau d'une des surfaces du bouchon 2 selon un axe sensiblement parallèle à l'axe de pivotement du bouchon 2. A titre d'exemple, ce relief est susceptible de présenter un arrangement en étoile dont différentes branches rayonnent depuis la partie centrale en direction de la partie périphérique du bouchon 2, la partie centrale du bouchon 2 étant également susceptible de comporter une épaisseur. Les extrémités radiales des différentes branches formées par des bourrelets sont également susceptibles d'être réunies par en périphérie par un bourrelet disposé le long d'un cercle circonscrit de l'étoile et qui opère la jonction des branches.

Selon un exemple se rapportant à une autre variante spécifique et susceptible d'être combinée avec les variantes précédemment détaillées, la structure de renfort 22 est prolongée au niveau de chacun des tétons 23 du bouchon 2. Cette construction de la structure de renfort 22 jusqu'aux tétons 23 permet un renfort des tétons 23 qui, en réalisant la jonction mécanique entre le bouchon 2 et le réservoir 1, correspondent à une portion du bouchon 2 supportant de fortes contraintes. Cette construction particulière de la structure de renfort 22 permet également d'opérer une distribution des forces et des contraintes supportées par le bouchon 2 jusqu'au goulot 12, de sorte que les efforts supportés par le bouchon 2 se trouvent transmis, notamment le long de la structure de renfort 22, jusqu'à la structure du réservoir 1.

Selon un exemple se rapportant à une autre variante du dispositif de fermeture de l'invention et susceptible d'être combinée avec les variantes précédemment détaillées, le bouchon 2 présente un arrangement convexe destiné à être orienté vers l'intérieur du réservoir 1 de stockage de façon à renforcer sa résistance à la déformation sous l'effet d'une pression exercée depuis l'intérieur du réservoir 1 de stockage. Cette convexité du bouchon 2 et son orientation particulière permettent d'optimiser la distribution des forces et des contraintes à l'intérieur du bouchon 2 en cas d'efforts exercés par une pression exercée depuis l'intérieur du réservoir 1. En effet, la convexité du bouchon 2 distribue les contraintes supportées de sorte que les efforts présents au niveau de la partie centrale du bouchon 2 se trouvent dirigés vers la périphérie du bouchon 2. La redirection des efforts au niveau du bord périphérique du bouchon 2 est ainsi susceptible d'accentuer la pression exercée par le joint 21 contre la paroi intérieure du goulot 12. La capacité d'étanchéité du bouchon 2 au réservoir 1 s'en trouve alors augmentée.

Selon un exemple se rapportant à une autre variante du dispositif de fermeture de l'invention et susceptible d'être combinée avec les variantes précédemment détaillées, la surface du bouchon 2 destinée à être orientée vers l'extérieur du réservoir 1 de stockage présente une interface d'actionnement 24 en rotation autour de l'axe du cylindre du goulot 12. Selon un exemple de construction, cette interface d'actionnement 24 est réalisée par l'extrémité d'au moins un téton 23 du bouchon 2 qui traverse le goulot 12 au niveau d'un filet 13. Cette extrémité de téton 23 est ainsi susceptible de réaliser un bras de manipulation pour opérer le pivotement du bouchon 2 autour de son axe d'insertion dans le goulot 12. Selon un autre exemple de construction susceptible d'être alternatif ou complémentaire du précédent, l'interface d'actionnement 24 comprend une interface qui, dans un plan parallèle au plan du bouchon 2 présente une forme polygonale centrée sur l'axe de pivotement du bouchon 2 ou son axe d'insertion dans le goulot 12. Cette interface polygonale est ainsi apte à coopérer avec une interface complémentaire d'un outil pour l'actionnement du bouchon 2. A titre d'exemple de construction, l'interface polygonale est de type hexagonal similaire à la surface périphérique d'un boulon. Selon un autre exemple de construction susceptible d'être alternatif ou complémentaire des précédents, l'interface d'actionnement 24 comprend une interface manuelle intégrée à la surface du bouchon 2 par exemple sous la forme d'une paire d'ailettes similaires à celles d'un écrou papillon, ces ailettes étant disposées symétriquement de part et d'autre de l'axe de pivotement du bouchon 2 ou de son axe d'insertion dans le goulot 12.

Selon un exemple se rapportant à une autre variante du dispositif de fermeture de l'invention et susceptible d'être combinée avec les variantes précédemment détaillées, le bouchon 2 comprend au moins un orifice traversant 25 dont au moins une ouverture 251 est configurée pour être en appui, directement ou indirectement, contre une extrémité d'un conduit 3. Un tel orifice 25 au travers du bouchon 2 permet le positionnement d'un conduit 3 monté au travers du bouchon 2. Un tel conduit 3 est préférentiellement rectiligne et est susceptible de correspondre à un doigt de gant pour y permettre l'insertion de différents capteurs pour la mesure de différents paramètres à l'intérieur du réservoir 2. De façon préférentielle, le conduit 3 présente un diamètre en section sensiblement identique sinon légèrement inférieur au diamètre en section de l'orifice traversant 25 ou de l'ouverture 251 de cet orifice traversant 25. Selon un exemple particulier de construction, l'orifice traversant 25 se trouve positionné au centre du bouchon 2, de sorte que le conduit 3 inséré au travers de cet orifice 25 est coaxial avec l'axe de pivotement du bouchon 2 par rapport au goulot 12. Lorsque le bouchon 2 comprend une interface d'actionnement 24 de forme polygonale, l'orifice traversant 25 est ainsi susceptible d'être centré sur cette interface d'actionnement 24. Selon un exemple de construction, le conduit 3 est fixé directement au bouchon 2 au niveau du pourtour de l'ouverture 251 de l'orifice traversant 25 pour former un ensemble structurel unique avec le bouchon 2. Une telle construction permet d'écarter tout défaut d'étanchéité entre le bouchon 2 et la surface périphérique du conduit 3. Selon une alternative de construction préférée, le conduit 3 correspond à une structure indépendante du bouchon 2. La surface périphérique du conduit 3 se trouve alors en contact serré, directement ou indirectement, avec le pourtour de l'ouverture 251 de l'orifice traversant 25 du bouchon 2 de façon à empêcher tout problème d'étanchéité susceptible de survenir entre le bouchon 2 et la surface périphérique du conduit 3.

Selon un exemple se rapportant à une variante spécifique de la variante précédente du dispositif de fermeture de l'invention, l'interaction entre l'orifice traversant 25 et le conduit 3 comprend un joint circulaire 252 intermédiaire centré sur l'axe de l'ouverture 251 de l'orifice traversant 25 et du conduit 3. Ce joint circulaire 252 est susceptible d'être positionné au niveau de l'ensemble de la hauteur de l'interaction entre l'orifice traversant 25 et le conduit 3 de sorte qu'il n'existe aucun contact direct entre l'orifice traversant 25 et le conduit 3. Le joint circulaire 252 réalise ainsi une interface intermédiaire comprimée entre l'orifice traversant 25 et le conduit 3 de façon assurer une étanchéité entre le bouchon 2 et la surface périphérique du conduit 3. Selon un arrangement alternatif, le joint circulaire 252 est positionné au niveau d'une portion de la hauteur de l'interaction entre l'orifice traversant 25 et le conduit 3 de sorte que, d'une part, une première partie du conduit 3 est en contact direct avec le bouchon 2 au niveau de l'orifice traversant 25 et, d'autre part, une seconde partie du conduit 3 est en contact indirect avec le bouchon 2 par l'intermédiaire du joint circulaire 252. Le joint circulaire 252 serré entre le bouchon 2 et la surface périphérique du conduit 3 assure l'étanchéité entre ces deux éléments 2, 3. De façon préférée, le joint circulaire 252 est positionné dans un logement 253 disposé au niveau du pourtour de l'ouverture 251 de l'orifice traversant 25. Ce logement 253 présente au moins une ouverture orientée vers l'axe de l'orifice traversant 25 ou du conduit 3. De façon complémentaire, ce logement 253 est susceptible d'être réalisé sous la forme d'un épaulement dimensionné pour recevoir le joint circulaire 252 et positionné de façon circulaire au niveau du bord intérieur de l'orifice traversant 25 ou d'une de ses ouvertures 251.

Selon un exemple se rapportant à une autre variante spécifique et susceptible d'être combinée avec la variante précédemment détaillée, l'interaction entre l'orifice traversant 25 et le conduit 3 fait intervenir une bride 31, un filetage 32 ou une soudure. A titre d'exemple, l'une des extrémités du conduit 3 est associée à une bride 31 à laquelle elle est fixée. La bride 31 est alors configurée pour coopérer avec une surface, préférentiellement la surface extérieure, du bouchon 2 localisé autour de l'une des ouvertures de l'orifice traversant 25, par exemple par une complémentarité de forme entre une surface de la bride 31 et un relief porté par la surface du bouchon 2. Aussi, lors de l'insertion du conduit 3 dans le réservoir 1 au travers de l'orifice traversant 25 du bouchon 2, la bride 31 en contact avec la surface extérieure du bouchon 2 réalise une butée qui permet de bloquer la course d'insertion du conduit 3 et évite que le conduit 3 ne tombe à l'intérieur du réservoir 1. Selon un autre exemple susceptible d'être combiné avec l'exemple précédent, une partie de la surface périphérique du conduit 3 ou de la bride 31 comprend un filetage 32 dont le pas est complémentaire d'un filetage porté par la paroi intérieure de l'orifice traversant 25 du bouchon 2. Aussi, le conduit 3 est susceptible d'être monté et assemblé avec le bouchon 2 par vissage direct avec l'orifice traversant 25 lors de son insertion au travers du bouchon 2 ou par vissage indirect par l'intermédiaire d'une bride 31 à laquelle le conduit 3 est fixé. Selon un autre exemple susceptible d'être une alternative aux deux exemples précédents, un orifice en extrémité du conduit 3 présente une lèvre 33 dont le diamètre en section est supérieur au diamètre en section du reste du conduit 3. Cette lèvre 33 est configurée pour coopérer avec un épaulement 253 porté par la paroi intérieure de l'orifice traversant 25, soit directement soit indirectement par l'intermédiaire d'un joint 21 circulaire logé au niveau de cet épaulement 253, le joint 21 circulaire entourant le conduit 3 au niveau de la surface périphérique de sa lèvre 33 d'extrémité. Le diamètre en section de la paroi intérieure de l'orifice traversant 25 au niveau de l'épaulement 253 est inférieur au diamètre en section de la lèvre 33 du conduit 3. La coopération de la lèvre 33 en extrémité du conduit 3 avec l'épaulement 253 de l'orifice traversant 25 opère ainsi un blocage du conduit 3 avec le bouchon 2 dans sa course au travers de l'orifice traversant 25. Le maintien de la lèvre 33 du conduit 3 contre la surface de l'épaulement 253 est également susceptible d'être complété par le positionnement d'une bride 31 en appui contre la surface de la lèvre 33 du conduit 3 opposée à l'épaulement 253, cette bride 31 permettant le serrage du conduit 3 par sa lèvre 33 avec l'orifice traversant 25 du bouchon 2. De façon complémentaire, la bride 31 est susceptible de permettre le serrage par l'intermédiaire d'un filetage 32 qui coopère avec un filetage complémentaire porté par une portion de la paroi intérieure de l'orifice traversant 25 située au-dessus de l'épaulement 253 en interaction, directe ou indirecte, avec la lèvre 33 du conduit 3. L'actionnement du pivotement de la bride 31 par rapport à l'orifice traversant 25 du bouchon 2 pour le serrage de la lèvre 33 du conduit 3 contre l'épaulement 253 de l'orifice 25 est susceptible d'être réalisé par l'intermédiaire d'une interface d'actionnement 24 en rotation pour l'opération de vissage de la bride 31 dans l'orifice traversant 25, par exemple par l'intermédiaire d'une interface polygonale apte à coopérer avec une interface complémentaire d'un outil.

Selon un exemple se rapportant à une autre variante susceptible d'être combinée avec plusieurs des variantes précédemment détaillées, l'interaction entre l'orifice traversant 25 et le conduit 3 est réalisée au niveau de la surface du bouchon 2 destinée à être orientée vers l'intérieur du réservoir 1 de stockage. En étant effectués au niveau de la surface intérieure du bouchon 2, le montage et l'installation du conduit 3 sur le bouchon 2 directement ou par l'intermédiaire d'une bride 31 éventuelle se doivent d'être opérés préalablement à l'installation du bouchon 2 sur l'ouverture 11 du réservoir 1.

Selon un exemple se rapportant à une autre variante susceptible d'être combinée avec plusieurs des variantes précédemment détaillées et formant une alternative de construction à la variante précédemment détaillée, l'interaction entre l'orifice traversant 25 et le conduit 3 est réalisée au niveau de la surface du bouchon 2 destinée à être orientée vers l'extérieur du réservoir 1 de stockage, le conduit 3 étant monté au travers de l'orifice traversant 25 du bouchon 2. En étant effectués au niveau de la surface intérieure du bouchon 2, le montage et l'installation du conduit 3 sur le bouchon 2 directement ou par l'intermédiaire d'une bride 31 sont alors susceptibles d'être opérés préalablement ou postérieurement à l'installation du bouchon 2 sur l'ouverture 11 du réservoir 1.

Selon un exemple se rapportant à une autre variante susceptible d'être combinée avec plusieurs des variantes précédemment détaillées, le bord périphérique du bouchon 2 comprend un épaulement 26 qui porte le joint périphérique 21, l'épaulement 26 étant à distance de la surface extérieure du bouchon 2 de sorte que le joint périphérique 21 se trouve écarté, d'une part, de la surface extérieure du bouchon 2 et, d'autre part, du reste de la surface périphérique du bouchon 2. Le joint périphérique 21 du bouchon 2 est alors porté par la surface périphérique de l'épaulement 26. Cet arrangement permet la réalisation d'un espacement 4 entre, d'une part, une partie de la paroi intérieure du goulot 12 disposée au contact, voire à proximité, de l'orifice extérieur du goulot 12 et, d'autre part, le bord périphérique du bouchon 2 qui ne porte pas l'épaulement 26. La distance entre l'épaulement 26 et la surface extérieure du bouchon 2 permet alors à cet espacement 4 d'être ouvert au niveau de l'orifice extérieur du goulot 12. Un tel espacement 4 autorise ainsi le positionnement d'un élément 5 fixé par clipsage au niveau d'au moins une partie du bord du goulot 12 sans que la présence du bouchon 2 dans l'ouverture 11 cylindrique du goulot 12 ne gêne le positionnement d'un élément de clipsage au niveau de la paroi intérieure du goulot 12. L'espacement 4 autorise ainsi une accessibilité de la paroi intérieure du goulot 12 au niveau d'une portion plus importante de la hauteur grâce au positionnement écarté du joint périphérique 21 par l'épaulement 26 du bouchon 2.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention tel que défini par les revendications jointes.

## Revendications

1. Dispositif de fermeture étanche d'une ouverture (11) de réservoir (1) de stockage pour un contenu susceptible d'être à haute pression, ce dispositif comprenant :
- un goulot (12) cylindrique circulaire positionné sur la paroi du réservoir (1) de sorte que la surface intérieure du goulot (12) entoure l'ouverture (11) du réservoir (1), la surface intérieure du goulot (12) cylindrique comprenant au moins deux filets (13) arrangés traversants de l'épaisseur du goulot (12),
- un bouchon (2) cylindrique circulaire de dimensions complémentaires au goulot (12), ce bouchon (2) intégrant au moins un joint (21) sur sa face périphérique qui soit configuré pour être en appui contre la surface intérieure du goulot (12) lors du positionnement du bouchon (2) dans le goulot (12), la surface périphérique du bouchon (2) comprenant au moins deux tétons (23) positionnés entre eux de façon à coopérer individuellement avec un filet (13) respectif du goulot (12), le bouchon (2) comprenant une structure de renfort (22) s'opposant à sa déformation sous l'effet d'une pression exercée depuis l'intérieur du réservoir (1) de stockage, ladite structure de renfort (22) du bouchon (2) étant réalisée par une âme métallique surmoulée.

2. Dispositif de fermeture étanche d'une ouverture (11) de réservoir (1) selon la revendication 1, **caractérisé en ce que** les au moins deux filets (13) du goulot (12) comprennent, d'une part, une première extrémité (131) ouverte au niveau du rebord d'extrémité du goulot (12) et, d'autre part, une seconde extrémité (132) fermée définissant une fin de course des tétons (23) du bouchon (2), les secondes extrémités (132) des filets (13) comprenant un logement (133) respectif réalisé de sorte que ces logements (133) présentent un bord plus rapproché du rebord d'extrémité du goulot (12) par rapport au bord juxtaposé d'une portion de la course du filet (13) à proximité du logement (133) qui est plus éloigné du rebord d'extrémité du goulot (12).

3. Dispositif de fermeture étanche d'une ouverture (11) de réservoir (1) selon une des revendications précédentes, **caractérisé en ce que** les au moins deux filets (13) du goulot (12) comprennent, d'une part, une première extrémité (131) ouverte au niveau du rebord d'extrémité du goulot (12) et, d'autre part, une seconde extrémité (132) fermée définissant une fin de course des tétons (23) du bouchon (2), les filets (13) comprenant une portion de fin de course intégrant un logement (133) disposé dans un plan sensiblement perpendiculaire à l'axe du cylindre du goulot 12.

4. Dispositif de fermeture étanche d'une ouverture (11) de réservoir (1) selon une des revendications précédentes, **caractérisé en ce que** la structure de renfort (22) du bouchon (2) est réalisée par au moins un relief qui présente la forme d'un bourrelet au niveau de l'épaisseur du bouchon (2).

5. Dispositif de fermeture étanche d'une ouverture (11) de réservoir (1) selon une des revendications précédentes, **caractérisé en ce que** la structure de renfort (22) est prolongée au niveau de chacun des tétons (23) du bouchon (2).

6. Dispositif de fermeture étanche d'une ouverture (11) de réservoir (1) selon une des revendications précédentes, **caractérisé en ce que** le bouchon (2) présente un arrangement convexe destiné à être orienté vers l'intérieur du réservoir (1) de stockage de façon à renforcer sa résistance à la déformation sous l'effet d'une pression exercée depuis l'intérieur du réservoir (1) de stockage.

7. Dispositif de fermeture étanche d'une ouverture (11) de réservoir (1) selon une des revendications précédentes, **caractérisé en ce que** la surface du bouchon (2) destinée à être orientée vers l'extérieur du réservoir (1) de stockage présente une interface d'actionnement (24) en rotation autour de l'axe du cylindre du goulot (12).

8. Dispositif de fermeture étanche d'une ouverture (11) de réservoir (1) selon une des revendications précédentes, **caractérisé en ce que** le bouchon (2) comprend au moins un orifice traversant (25) dont au moins une ouverture (251) est configurée pour être en appui, directement ou indirectement, contre une extrémité d'un conduit (3).

9. Dispositif de fermeture étanche d'une ouverture (11) de réservoir (1) selon la revendication 8, **caractérisé en ce que** l'interaction entre l'orifice traversant (25) et le conduit (3) comprend un joint circulaire (252) intermédiaire centré sur l'axe de l'ouverture (251) de l'orifice traversant (25) et du conduit (3).

10. Dispositif de fermeture étanche d'une ouverture (11) de réservoir (1) selon une des revendications 8 et 9, **caractérisé en ce que** l'interaction entre l'orifice traversant (25) et le conduit (3) fait intervenir une bride (31), un filetage (32) ou une soudure.

11. Dispositif de fermeture étanche d'une ouverture (11) de réservoir (1) selon une des revendications 8 à 10, **caractérisé en ce que** l'interaction entre l'orifice traversant (25) et le conduit (3) est réalisée au niveau de la surface du bouchon (2) destinée à être orientée vers l'intérieur du réservoir (1) de stockage.

12. Dispositif de fermeture étanche d'une ouverture (11) de réservoir (1) selon une des revendications 8 à 11, **caractérisé en ce que** l'interaction entre l'orifice traversant (25) et le conduit (3) est réalisée au niveau de la surface du bouchon (2) destinée à être orientée vers l'extérieur du réservoir (1) de stockage, le conduit (3) étant monté au travers de l'orifice traversant (25) du bouchon (2).

13. Dispositif de fermeture étanche d'une ouverture (11) de réservoir (1) selon une des revendications précédentes, **caractérisé en ce que** le bord périphérique du bouchon (2) comprend un épaulement (26) qui porte le joint périphérique (21), l'épaulement (26) étant à distance de la surface extérieure du bouchon (2) de sorte que le joint périphérique (21) se trouve écarté, d'une part, de la surface extérieure du bouchon (2) et, d'autre part, du reste de la surface périphérique du bouchon (2).

14. Dispositif de fermeture étanche d'une ouverture (11) de réservoir (1) selon une des revendications précédentes, **caractérisé en ce que** les filets (13) du goulot (12) et les tétons (23) du bouchon (2) sont distribués de sorte que leurs barycentres respectifs sont positionnés sur l'axe du cylindre du goulot (12). 1

## Patentansprüche

1. Vorrichtung zum dichten Verschließen einer Öffnung (11) eines Speicherbehälters (1) für einen Inhalt, der unter hohem Druck stehen kann, wobei diese Vorrichtung umfasst:
- einen kreiszylindrischen Hals (12), der an der Wand des Behälters (1) so positioniert ist, dass die Innenfläche des Halses (12) die Öffnung (11) des Behälters (1) umgibt, wobei die Innenfläche des zylindrischen Halses (12) mindestens zwei Bajonettnuten (13) umfasst, die durch die Dicke des Halses (12) hindurch angeordnet sind,
- einen kreiszylindrischen Verschluss (2) mit zu dem Hals (12) komplementären Abmessungen, wobei dieser Verschluss (2) mindestens eine Dichtung (21) an seiner Umfangsseite beinhaltet, die so ausgestaltet ist, dass sie bei der Positionierung des Verschlusses (2) in dem Hals (12) an der Innenfläche des Halses (12) anliegt, wobei die Umfangsfläche des Verschlusses (2) mindestens zwei Zapfen (23) umfasst, die untereinander so positioniert sind, dass sie einzeln mit einer jeweiligen Bajonettnut (13) des Halses (12) zusammenwirken,
wobei der Verschluss (2) eine Verstärkungsstruktur (22) umfasst, die seiner Verformung unter der Einwirkung eines vom Innenraum des Speicherbehälters (1) aus ausgeübten Drucks entgegenwirkt, wobei die Verstärkungsstruktur (22) des Verschlusses (2) durch einen umspritzten Metallkern ausgeführt ist.

2. Vorrichtung zum dichten Verschließen einer Öffnung (11) eines Behälters (1) nach Anspruch 1, **dadurch gekennzeichnet, dass** die mindestens zwei Bajonettnuten (13) des Halses (12) zum einen ein offenes erstes Ende (131) an dem Endrand des Halses (12) und zum anderen ein geschlossenes zweites Ende (132), das einen Endanschlag für die Zapfen (23) des Verschlusses (2) bildet, umfassen, wobei die zweiten Enden (132) der Bajonettnuten (13) eine jeweilige Aufnahme (133) umfassen, die so ausgeführt ist, dass diese Aufnahmen (133) einen Rand aufweisen, der dem Endrand des Halses (12) näher ist als der angrenzende Rand eines Abschnitts der Bahn der Gewindenut (13) in der Nähe der Aufnahme (133), der weiter von dem Endrand des Halses (12) entfernt ist.

3. Vorrichtung zum dichten Verschließen einer Öffnung (11) eines Behälters (1) nach einem der vorhergehenden Ansprüche, **dadurch gekennzeichnet, dass** die mindestens zwei Bajonettnuten (13) des Halses (12) zum einen ein offenes erstes Ende (131) an dem Endrand des Halses (12) und zum anderen ein geschlossenes zweites Ende (132), das einen Endanschlag für die Zapfen (23) des Verschlusses (2) bildet, umfassen, wobei die Bajonettnuten (13) einen Endanschlagabschnitt umfassen, der eine Aufnahme (133) beinhaltet, die in einer im Wesentlichen senkrecht zur Achse des Zylinders des Halses 12 verlaufenden Ebene angeordnet ist.

4. Vorrichtung zum dichten Verschließen einer Öffnung (11) eines Behälters (1) nach einem der vorhergehenden Ansprüche, **dadurch gekennzeichnet, dass** die Verstärkungsstruktur (22) des Verschlusses (2) durch mindestens ein Relief ausgeführt ist, das die Form eines Wulstes an der Dicke des Verschlusses (2) aufweist.

5. Vorrichtung zum dichten Verschließen einer Öffnung (11) eines Behälters (1) nach einem der vorhergehenden Ansprüche, **dadurch gekennzeichnet, dass** die Verstärkungsstruktur (22) an jedem der Zapfen (23) des Verschlusses (2) verlängert ist.

6. Vorrichtung zum dichten Verschließen einer Öffnung (11) eines Behälters (1) nach einem der vorhergehenden Ansprüche, **dadurch gekennzeichnet, dass** der Verschluss (2) eine konvexe Anordnung aufweist, die dazu bestimmt ist, zum Innenraum des Speicherbehälters (1) hin ausgerichtet zu sein, so dass sie seinen Widerstand gegenüber der Verformung unter der Einwirkung eines vom Innenraum des Speicherbehälters (1) aus ausgeübten Drucks verstärkt.

7. Vorrichtung zum dichten Verschließen einer Öffnung (11) eines Behälters (1) nach einem der vorhergehenden Ansprüche, **dadurch gekennzeichnet, dass** die Fläche des Verschlusses (2), die dazu bestimmt ist, zum Außenraum des Speicherbehälters (1) ausgerichtet zu sein, eine um die Achse des Zylinders des Halses (12) drehbare Betätigungsschnittstelle (24) aufweist.

8. Vorrichtung zum dichten Verschließen einer Öffnung (11) eines Behälters (1) nach einem der vorhergehenden Ansprüche, **dadurch gekennzeichnet, dass** der Verschluss (2) mindestens eine Durchgangsbohrung (25) aufweist, von der mindestens eine Öffnung (251) dazu ausgestaltet ist, direkt oder indirekt an einem Ende eines Kanals (3) anzuliegen.

9. Vorrichtung zum dichten Verschließen einer Öffnung (11) eines Behälters (1) nach Anspruch 8, **dadurch gekennzeichnet, dass** die Interaktion zwischen der Durchgangsbohrung (25) und dem Kanal (3) eine kreisförmige Zwischendichtung (252) umfasst, die auf die Achse der Öffnung (251) der Durchgangsbohrung (25) und des Kanals (3) zentriert ist.

10. Vorrichtung zum dichten Verschließen einer Öffnung (11) eines Behälters (1) nach einem der Ansprüche 8 und 9, **dadurch gekennzeichnet, dass** an der Interaktion zwischen der Durchgangsbohrung (25) und dem Kanal (3) einen Flansch (31), ein Gewinde (32) oder eine Schweißung beteiligt ist.

11. Vorrichtung zum dichten Verschließen einer Öffnung (11) eines Behälters (1) nach einem der Ansprüche 8 bis 10, **dadurch gekennzeichnet, dass** die Interaktion zwischen der Durchgangsbohrung (25) und dem Kanal (3) an einer Fläche des Verschlusses (2) ausgeführt ist, die dazu bestimmt ist, zum Innenraum des Speicherbehälters (1) ausgerichtet zu sein.

12. Vorrichtung zum dichten Verschließen einer Öffnung (11) eines Behälters (1) nach einem der Ansprüche 8 bis 11, **dadurch gekennzeichnet, dass** die Interaktion zwischen der Durchgangsbohrung (25) und dem Kanal (3) an einer Fläche des Verschlusses (2) ausgeführt ist, die dazu bestimmt ist, zum Außenraum des Speicherbehälters (1) ausgerichtet zu sein, wobei der Kanal (3) durch die Durchgangsbohrung (25) des Verschlusses (2) hindurch montiert ist.

13. Vorrichtung zum dichten Verschließen einer Öffnung (11) eines Behälters (1) nach einem der vorhergehenden Ansprüche, **dadurch gekennzeichnet, dass** der Umfangsrand des Verschlusses (2) eine Schulter (26) umfasst, welche die Umfangsdichtung (21) trägt, wobei die Schulter (26) von der Außenfläche des Verschlusses (2) beabstandet ist, so dass die Umfangsdichtung (21) zum einen von der Außenfläche des Verschlusses (2) und zum anderen vom Rest der Umfangsfläche des Verschlusses (2) entfernt ist.

14. Vorrichtung zum dichten Verschließen einer Öffnung (11) eines Behälters (1) nach einem der vorhergehenden Ansprüche, **dadurch gekennzeichnet, dass** die Bajonettnuten (13) des Halses (12) und die Zapfen (23) des Verschlusses (2) so verteilt sind, dass ihre jeweiligen Baryzentren auf der Achse des Zylinders des Halses (12) positioniert sind.

## Claims

1. Device for sealing an opening (11) of a storage tank (1) for contents that may be at high pressure, this device comprising:
- a circular cylindrical neck (12) positioned on the wall of the tank (1) such that the inner surface of the neck (12) surrounds the opening (11) of the tank (1), the inner surface of the cylindrical neck (12) comprising at least two threads (13) arranged so as to pass through the thickness of the neck (12),
- a circular cylindrical cover (2) with complementary dimensions to the neck (12), this cover (2) incorporating, on its peripheral face, at least one seal (21), which is configured to bear against the inner surface of the neck (12) when the cover (2) is positioned in the neck (12), the peripheral surface of the cover (2) comprising at least two lugs (23) positioned relative to one another so as to individually cooperate with a respective thread (13) of the neck (12),
the cover (2) comprising a reinforcing structure (22) opposing deformation thereof under the effect of pressure exerted from the inside of the storage tank (1), said reinforcing structure (22) of the cover (2) being formed by an overmoulded metal core.

2. Device for sealing an opening (11) of a tank (1) according to Claim 1, **characterized in that** the at least two threads (13) of the neck (12) comprise, on the one hand, an open first end (131) at the end rim of the neck (12) and, on the other hand, a closed second end (132) defining an end of travel of the lugs (23) of the cover (2), the second ends (132) of the threads (13) comprising a respective housing (133) formed such that these housings (133) have an edge that is closer to the end rim of the neck (12) than the juxtaposed edge of a portion of the path of the thread (13) in the vicinity of the housing (133), which is further from the end rim of the neck (12).

3. Device for sealing an opening (11) of a tank (1) according to either of the preceding claims, **characterized in that** the at least two threads (13) of the neck (12) comprise, on the one hand, an open first end (131) at the end rim of the neck (12) and, on the other hand, a closed second end (132) defining an end of travel of the lugs (23) of the cover (2), the threads (13) comprising an end of travel portion incorporating a housing (133) arranged in a plane substantially perpendicular to the axis of the cylinder of the neck 12.

4. Device for sealing an opening (11) of a tank (1) according to one of the preceding claims, **characterized in that** the reinforcing structure (22) of the cover (2) is formed by at least one relief that has the shape of a bead at the thickness of the cover (2).

5. Device for sealing an opening (11) of a tank (1) according to one of the preceding claims, **characterized in that** the reinforcing structure (22) is extended at each of the lugs (23) of the cover (2).

6. Device for sealing an opening (11) of a tank (1) according to one of the preceding claims, **characterized in that** the cover (2) has a convex arrangement intended to be oriented towards the inside of the storage tank (1) so as to reinforce its resistance to deformation under the effect of pressure exerted from the inside of the storage tank (1).

7. Device for sealing an opening (11) of a tank (1) according to one of the preceding claims, **characterized in that** the surface of the cover (2) intended to be oriented towards the outside of the storage tank (1) has an actuating interface (24) that rotates about the axis of the cylinder of the neck (12).

8. Device for sealing an opening (11) of a tank (1) according to one of the preceding claims, **characterized in that** the cover (2) comprises at least one through-orifice (25), at least one opening (251) of which is configured to bear, directly or indirectly, against one end of a duct (3).

9. Device for sealing an opening (11) of a tank (1) according to Claim 8, **characterized in that** the interaction between the through-orifice (25) and the duct (3) comprises an intermediate circular seal (252) centred on the axis of the opening (251) of the through-orifice (25) and of the duct (3).

10. Device for sealing an opening (11) of a tank (1) according to either of Claims 8 and 9, **characterized in that** the interaction between the through-orifice (25) and the duct (3) involves a flange (31), a screw thread (32) or a weld.

11. Device for sealing an opening (11) of a tank (1) according to one of Claims 8 to 10, **characterized in that** the interaction between the through-orifice (25) and the duct (3) takes place at the surface of the cover (2) that is intended to be oriented towards the inside of the storage tank (1).

12. Device for sealing an opening (11) of a tank (1) according to one of Claims 8 to 11, **characterized in that** the interaction between the through-orifice (25) and the duct (3) takes place at the surface of the cover (2) that is intended to be oriented towards the outside of the storage tank (1), the duct (3) being mounted through the through-orifice (25) of the cover (2).

13. Device for sealing an opening (11) of a tank (1) according to one of the preceding claims, **characterized in that** the peripheral edge of the cover (2) comprises a shoulder (26) that supports the peripheral seal (21), the shoulder (26) being at a distance from the outer surface of the cover (2) so that the peripheral seal (21) is spaced apart, on the one hand, from the outer surface of the cover (2) and, on the other hand, from the rest of the peripheral surface of the cover (2).

14. Device for sealing an opening (11) of a tank (1) according to one of the preceding claims, **characterized in that** the threads (13) of the neck (12) and the lugs (23) of the cover (2) are distributed so that their respective centres of mass are positioned on the axis of the cylinder of the neck (12).
